# FASCICULE DE BREVET EUROPEEN

(11) **EP 0 857 570 B1**
(45) Date de publication et mention de la délivrance du brevet: **14.04.2004**
(21) Numéro de dépôt: 98400040.6
(22) Date de dépôt: 12.01.1998
(51) Int. Cl.: B32B 1/08, F16L 11/12, F16L 11/08, F16L 11/04

(54) **Produit composite thermoplastique-élastomère, tel par exemple qu'un tuyau de transport de réfrigérant pour circuit de climatisation**
Verbundprodukt aus Thermoplasten und Elastomeren, welches zum Beispiel ein Kühlschlauch in einer Klimaanlage sein kann
Composite product comprising thermoplastic and elastomeric materials, like for example a hose for cooling liquid for an airconditioning system

(30) Priorité: 05.02.1997 FR 9701279
(43) Date de publication de la demande: 12.08.1998
(73) Titulaire: HUTCHINSON, 75008 Paris (FR)
(72) Inventeur: Garois, Nicolas, 45200 Amilly (FR)
(74) Mandataire: Corizzi, Valérie

(56) Documents cités:
- EP-A- 0 732 384
- DE-A- 4 132 123
- FR-A- 2 689 956
- US-A- 4 998 564
- DATABASE WPI Section Ch, Week 9536 Derwent Publications Ltd., London, GB; Class A32, AN 95-272003 XP002043626 & JP 07 171 906 A (BRIDGESTONE CORP) , 11 juillet 1995

## Description

L'invention concerne un produit composite thermoplastique-élastomère tel par exemple qu'un tuyau de transport de réfrigérant pour circuit de climatisation de véhicule automobile.

Ces produits doivent respecter des normes de plus en plus sévères, notamment en ce qui concerne leur souplesse (réduction de la transmission des vibrations), leur tenue thermique (interne et externe), leur résistance aux agents extérieurs et, quand il s'agit de tuyaux, de leur imperméabilité vis-à-vis du fluide transporté. De plus, leur durée de vie doit être aussi longue que possible et leurs qualités d'étanchéité et d'imperméabilité doivent être maintenues pendant toute cette durée de vie.

On a déjà proposé, en particulier dans la demande de brevet EP A-0 732 384 de la demanderesse, de réaliser des produits composites thermoplastique-élastomère dans lesquels l'adhérence entre le thermoplastique et l'élastomère est totale grâce à l'incorporation d'agents modifiants dans le thermoplastique et l'élastomère, le thermoplastique jouant dans ces produits le rôle d'une armature, d'un renfort ou d'un insert, ce qui permet notamment de remplacer les armatures métalliques par des armatures en thermoplastique dans des profilés en élastomère pour les alléger et améliorer leurs performances, tout en simplifiant leur fabrication.

Il a également été proposé à de nombreuses reprises de réaliser des tuyaux composites thermoplastique-élastomère pour le transport de fluides dans l'industrie automobile, ces tuyaux comprenant en général une couche interne de polyamide, une couche d'élastomère recouvrant le polyamide, un renfort textile et une couche externe de protection en caoutchouc ou en élastomère.

Il faut souvent, dans ces tuyaux connus, réaliser un compromis entre la souplesse désirée et l'imperméabilité au fluide transporté et l'on doit en outre interposer une couche mince d'une matière adhésive appropriée entre le thermoplastique et l'élastomère pour assurer leur adhérence.

Dans le cas des tuyaux de transport de réfrigérant pour circuit de climatisation, il est nécessaire d'améliorer la souplesse de la couche interne de polyamide tout en conservant son imperméabilité au fluide transporté (les fluides réfrigérants utilisés jusqu'à présent et qui contenaient des CFC sont remplacés par des HFC connus sous la dénomination R134a, associés à un lubrifiant du type polyalkylène glycol) et l'on a par exemple proposé pour cette couche interne un mélange de polyamide, d'une polyoléfine modifiée par greffage et d'ε-caprolactame, mais cette composition n'adhère pas à la couche d'élastomère qui la recouvre. De plus, la quantité d'ε-caprolactame utilisée est un compromis entre souplesse et imperméabilité au fluide, l'addition d'ε-caprolactame permettant d'améliorer la souplesse au détriment de l'imperméabilité.

La présente invention a pour objet un produit composite thermoplastique-élastomère avec une adhérence totale entre le thermoplastique et l'élastomère, une souplesse au moins égale ou supérieure à celle des produits concurrents de la technique antérieure ainsi qu'une excellente imperméabilité aux fluides transportés (dans le cas d'un tuyau) et notamment aux nouveaux fluides réfrigérants qui sont utilisés dans les circuits de climatisation pour véhicule automobile.

L'invention propose, à cet effet, un produit composite comprenant une couche interne d'un mélange d'un thermoplastique et d'un agent modifiant, recouverte d'une couche d'un mélange d'un élastomère et d'un agent modifiant, caractérisé en ce que le thermoplastique est le polyamide 6, le polyamide 6.6, l'agent modifiant du thermoplastique est choisi parmi le polybutadiène-vinyle-1,2 greffé à l'anhydride maléique, un silane ou un élastomère éthylène-acide acrylique, l'élastomère est choisi parmi le caoutchouc butyles, les caoutchoucs butyles halogénés l'agent modifiant de l'élastomère étant choisi parmi les silanes.

On a constaté que, dans ces produits, l'adhérence thermoplastique - élastomère est totale sans qu'il soit nécessaire d'utiliser une couche intermédiaire d'un adhésif, et qu'il est impossible de séparer sans les détruire les couches de thermoplastique et d'élastomère.

On a également constaté que l'imperméabilité du produit selon l'invention aux nouveaux fluides réfrigérants utilisés dans l'industrie automobile est meilleure que celle des tuyaux antérieurs précités comprenant une couche interne formée d'un mélange de polyamide 6, d'un copolymère éthylène-propylène greffé à l'anhydride maléique et d'ε-caprolactame, tandis que les flexibilités des produits selon l'invention sont au moins égales ou supérieures à celles des tuyaux antérieurs.

Les proportions d'agents modifiants dans le thermoplastique et dans l'élastomère peuvent varier très largement et sont comprises, de façon générale, entre 1 et 50 % environ.

L'élastomère et le thermoplastique utilisés peuvent également comprendre des charges, organiques ou inorganiques, ainsi que des plastifiants.

L'invention propose également un tuyau de transport de fluide réfrigérant pour circuit de climatisation de véhicule automobile, comprenant une couche interne du thermoplastique et une couche de l'élastomère qui viennent d'être décrits et dans lequel l'épaisseur de la couche interne de thermoplastique est d'environ 0,1 à 2 mm , celle de la couche d'élastomère étant d'environ 0,2 à 3 mm.

Un tel tuyau comprend de plus une couche textile de renforcement recouvrant la couche d'élastomère et recouverte elle-même d'une couche de protection en élastomère.

Une couche mince d'élastomère peut également être prévue sur la face interne de la couche de thermoplastique, pour améliorer l'étanchéité du montage du tuyau sur un embout de connexion.

Dans un mode de réalisation préféré de l'invention, le thermoplastique précité est un mélange de polyamide 6, de caprolactame, d'un silane et d'au moins un composant choisi parmi un terpolymère d'éthylène, d'acide acrylique et d'acrylate et un caoutchouc butyle halogéné, tel qu'un bromobutyle par exemple.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe d'un produit composite selon l'invention,
- la figure 2 est une vue schématique partielle en perspective d'un tuyau selon l'invention.

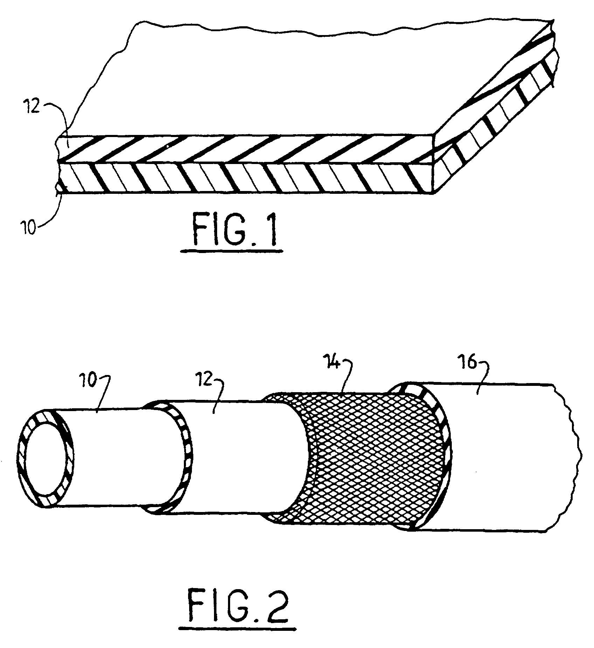

Le produit composite selon l'invention qui est représenté schématiquement en figure 1, comprend une couche 10 de thermoplastique recouverte d'une couche 12 d'élastomère, l'adhérence de ces deux couches l'une à l'autre étant telle que toute tentative de séparation de ces deux couches se traduit par la destruction de l'une et/ou de l'autre de ces couches.

Le thermoplastique de la couche 10 peut être choisi parmi les composés suivants : PA 6, en mélange avec au moins l'un des agents modifiants suivants :
- polybutadiène-vinyle-1,2 greffé à l'anhydride maléique, silanes et copolymères éthylène-acide acrylique. Plusieurs de ces agents modifiants peuvent être ajoutés au thermoplastique précité.

La quantité d'agents modifiants dans le thermoplastique peut varier entre 1 et 50% environ en poids.

La couche 12 d'élastomère est à base d'un élastomère choisi parmi les composés suivants : les caoutchouc butyles, butyles halogénés, avec addition d'un agent modifiant suivant : des silanes.

On peut ajouter plusieurs de ces agents modifants à l'élastomère, dans une proportion comprise entre 1 et 50% en poids.

Le tuyau représenté schématiquement en figure 2 est destiné au transport d'un fluide réfrigérant du type HFC utilisé dans les circuits de climatisation de véhicule automobile et comprend une couche interne 10 de thermoplastique ayant la même composition que la couche 10 de la figure 1, une couche 12 d'élastomère entourant la couche 10 de thermoplastique et ayant la composition de la couche 12 de la figure 1, un renfort textile 14 entourant la couche d'élastomère 12, ce renfort textile pouvant être une tresse de fils de polyester, de polyamide, etc..., et une couche 16 de protection, réalisée en un élastomère approprié qui peut être du même type que celui de la couche 12 ou différent.

Typiquement, l'épaisseur de la couche interne 10 à base de thermoplastique est de l'ordre de 0,1 à 0,3 mm et celle de la couche 12 à base d'élastomère est de 0,5 à 2 mm environ.

Une couche mince d'élastomère peut recouvrir la surface interne de la couche 10 à base de thermoplastique, pour améliorer l'étanchéité du montage du tuyau sur un embout de connexion ou analogue.

Par exemple, les compositions des couches 10 et 12 du tuyau de la figure 2 peuvent être les suivantes :
- couche 10 :
   - PA6 78 parts en poids
   - silane 2 parts en poids
   - plastifiant 20 parts en poids
ou :
- PA6 75 parts en poids
- polybutadiène-vinyle-1,2 greffé 20 parts en poids
- plastifiant 5 parts en poids.

- couche 12 :
   - caoutchouc butyle bromé 100 parts en poids
   - noir de carbone 80 parts en poids
   - peroxyde 8 parts en poids
   - co-agent 3 parts en poids
   - silane 5 parts en poids.

On peut également associer une couche 12 à base de caoutchouc butyle bromé modifié comme indiqué ci-dessus à une couche 10 de polyamide 6 modifiée par un copolymère éthylène-acide acrylique et par un silane et comprenant également un plastifiant.

On peut aussi associer, à la couche 12 de caoutchouc butyle bromé modifié une couche 10 de thermoplastique comprenant un polyamide 6 modifié par de l'isobutylène-p-méthylstyrène, du polypropylène, un silane et un plastifiant.

En particulier et selon un mode de réalisation préféré de l'invention, le thermoplastique de la couche interne 10 peut avoir l'une des compositions suivantes :
- PA 6 (65%) + terpolymère éthylène - acrylate - acide acrylique (25%) + caprolactame (8%) + silane (2%)
- PA 6 (65%) + bromobutyle (25%) + caprolactame (8%) + silane (2%)
- PA 6 (65%) + mélange de terpolymère éthylène - acrylate - acide acrylique et de butyle halogéné (25%) + caprolactame (8%) + silane (2%)
les pourcentages indiqués ci-dessus étant des pourcentages en poids.

Les polyamides 6 modifiés comme décrit ci-dessus ont une perméabilité vis-à-vis des fluides réfrigérants HFC (R 134 a) qui est de 1 à 2.10⁻⁸ cm³.mm/Pa.s.m² et des modules de flexion compris entre 300 et 600 Mpa environ.

## Revendications

1. Produit composite comprenant une couche (10) d'un mélange d'un thermoplastique et d'un agent modifiant, recouverte d'une couche (12) d'un mélange d'un élastomère et d'un agent modifiant, **caractérisé en ce que** le thermoplastique est le polyamide 6, l'agent modifiant du thermoplastique est choisi parmi le polybutadiène-vinyle-1,2 greffé à l'anhydride maléique, un silane ou un copolymère ethylène acide acrylique, l'élastomère est choisi parmi les caoutchoucs butyles, butyles halogénés, et l'agent modifiant de l'élastomère étant choisi parmi les silànes.

2. Produit selon la revendication 1, **caractérisé en ce que** la proportion d'agent modifiant dans le thermoplastique ou dans élastomère est comprise entre 1 et 50% environ en poids.

3. Produit selon la revendication 1 ou 2, **caractérisé en ce que** le thermoplastique et/ou élastomère comprennent plusieurs agents modifiants précités.

4. Produit selon l'une des revendications précédentes, **caractérisée en ce que** l'élastomère et/ou le thermoplastique comprennent des charges, organiques ou inorganiques, et/ou des plastifiants.

5. Tuyau de transport de fluide réfrigérant pour circuit de climatisation de véhicule automobile, comprenant une couche interne de thermoplastique recouverte d'une couche d'élastomère ayant les compositions décrites dans les revendications précédentes, **caractérisé en ce que** l'épaisseur de la couche de thermoplastique (10) est de 0,1 à 2 mm environ et celle de la couche d'élastomère (12) de 0,2 à 3 mm environ.

6. Tuyau selon la revendication 5, **caractérisé en ce que** la couche (12) d'élastomère est recouverte d'une couche textile (14) de renforcement et d'une couche (16) de protection, par exemple en élastomère.

7. Tuyau selon la revendication 5 ou 6, **caractérisé en ce qu'**il comprend également une couche mince d'élastomère sur la face interne de la couche (10) de thermoplastique.

8. Tuyau selon l'une des revendications 5 à 7, **caractérisé en ce que** la couche interne (10) de thermoplastique est en polyamide 6 comprenant un silane ou un polybutadiène-vinyle-1,2 greffé à l'anhydride maléique, et l'élastomère de la couche (12) recouvrant le thermoplastique est un bromobutyle modifié par un silane.

9. Tuyau selon l'une des revendications 5 à 7, **caractérisé en ce que** le thermoplastique de la couche interne (10) est un mélange de polyamide 6, de copolymère éthylène-acide acrylique, de silane et de plastifiant, l'élastomère de la couche (12) recouvrant le thermoplastique étant à base de bromobutyle.

10. Tuyau selon l'une des revendications 5 à 9, **caractérisé en ce que** le thermoplastique précité est un mélange de polyamide 6, de caprolactame, d'un silane et d'au moins un composant choisi parmi un terpolymère d'éthylène, d'acide acrylique et d'acrylate et un caoutchouc butyle halogéné, tel qu'un bromobutyle par exemple.

## Claims

1. Composite product comprising a layer (10) of a mixture of a thermoplastic and a modifier, covered with a layer (12) of a mixture of an elastomer and a modifier, **characterised in that** the thermoplastic is polyamide 6, the modifier of the thermoplastic is selected from among 1,2-vinylpolybutadiene grafted onto maleic anhydride, a silane or an ethylene/acrylic acid copolymer, the elastomer is selected from among the butyl rubbers and halogenated butyl rubbers, and the modifier of the elastomer is selected from among the silanes.

2. Product according to claim 1, **characterised in that** the proportion of modifier in the thermoplastic or in the elastomer is between 1 and 50% by weight, approximately.

3. Product according to claim 1 or 2, **characterised in that** the thermoplastic and/or elastomer comprise a plurality of modifiers as mentioned above.

4. Product according to one of the preceding claims, **characterised in that** the elastomer and/or the thermoplastic comprise organic or inorganic fillers, and/or plasticisers.

5. Hose for carrying coolant liquid for a motor vehicle air-conditioning system, comprising an inner layer of thermoplastic covered by a layer of elastomer having the compositions described in the preceding claims, **characterised in that** the thickness of the thermoplastic layer (10) is about 0.1 to 2 mm and that of the layer of elastomer (12) is about 0.2 to 3 mm.

6. Hose according to claim 5, **characterised in that** the layer of elastomer (12) is covered by a textile reinforcing layer (14) and a protective layer (16) of elastomer, for example.

7. Hose according to claim 5 or 6, **characterised in that** it also comprises a thin layer of elastomer on the inner surface of the layer (10) of thermoplastic.

8. Hose according to one of claims 5 to 7, **characterised in that** the inner layer (10) of thermoplastic is of polyamide 6 comprising a silane or a 1,2-vinylpolybutadiene grafted onto maleic anhydride, and the elastomer of the layer (12) covering the thermoplastic is a bromobutyl modified by a silane.

9. Hose according to one of claims 5 to 7, **characterised in that** the thermoplastic of the inner layer (10) is a mixture of polyamide 6, ethylene/acrylic acid copolymer, silane and plasticiser, the elastomer of the layer (12) covering the thermoplastic being based on bromobutyl.

10. Hose according to one of claims 5 to 9, **characterised in that** the above-mentioned thermoplastic is a mixture of polyamide 6, caprolactam, a silane and at least one component selected from among an ethylene terpolymer, acrylic acid and acrylate and a halogenated butyl rubber such as a bromobutyl, for example.

## Patentansprüche

1. Verbundprodukt, welches eine Schicht (10) aus einer Mischung aus einem Thermoplasten und einem Modifiziermittel umfaßt, die mit einer Schicht (12) aus einer Mischung aus einem Elastomer und einem Modifiziermittel bedeckt ist, **dadurch gekennzeichnet, dass** der Thermoplast Polyamid 6 ist, das Modifiziermittel für den Thermoplasten aus mit Maleinsäureanhydrid gepfropftem 1,2-Vinyl-Polybutadien, einem Silan oder einem Ethylen-Acrylsäure-Copolymer ausgewählt ist, das Elastomer aus Butylkautschuk und halogenierten Butylkautschuken ausgewählt ist, und das Modifiziermittel für das Elastomer aus Silanen ausgewählt ist.

2. Produkt nach Anspruch 1, **dadurch gekennzeichnet, dass** der Anteil des Modifiziermittels im Thermoplasten oder im Elastomer zwischen etwa 1 und 50 Gewichtsprozent liegt.

3. Produkt nach Anspruch 1 oder 2, **dadurch gekennzeichnet, dass** der Thermoplast und/oder das Elastomer mehrere der vorgenannten Modifiziermittel enthalten.

4. Produkt nach einem der vorhergehenden Ansprüche, **dadurch gekennzeichnet, dass** das Elastomer und/oder der Thermoplast organische oder anorganische Füllstoffe und/oder Weichmacher umfassen.

5. Schlauch zum Transport von Kühlflüssigkeit für Klimaanlagen von Kraftfahrzeugen, umfassend eine innere Thermoplastschicht, die mit einer Elastomerschicht bedeckt ist, die die in den vorhergehenden Ansprüchen beschriebenen Zusammensetzungen aufweisen, **dadurch gekennzeichnet, dass** die Dicke der Thermoplastschicht (10) etwa 0,1 bis 2 mm und die der Elastomerschicht (12) etwa 0,2 bis 3 mm beträgt.

6. Schlauch nach Anspruch 5, **dadurch gekennzeichnet, dass** die Elastomerschicht (12) mit einer Gewebeschicht (14) zur Verstärkung und einer Schutzschicht (16), beispielsweise aus Elastomer, bedeckt ist.

7. Schlauch nach Anspruch 5 oder 6, **dadurch gekennzeichnet, dass** er ferner auf der Innenseite der Thermoplastschicht (10) eine dünne Elastomerschicht umfasst.

8. Schlauch nach einem der Ansprüche 5 bis 7, **dadurch gekennzeichnet, dass** die innere Thermoplastschicht (10) aus Polyamid 6 ist, das ein Silan oder ein mit Maleinsäureanhydrid gepfropftes 1,2-Vinyl-Polybutadien umfasst, und das Elastomer der Schicht (12), die den Thermoplasten bedeckt, ein mit einem Silan modifiziertes Brombutyl ist.

9. Schlauch nach einem der Ansprüche 5 bis 7, **dadurch gekennzeichnet, dass** der Thermoplast der inneren Schicht (10) eine Mischung aus Polyamid 6, Ethylen-Acrylsäure-Copolymer, Silan und Weichmacher ist, wobei das Elastomer der Schicht (12), die den Thermoplasten überzieht, auf Basis von Brombutyl ist.

10. Schlauch nach einem der Ansprüche 5 bis 9, **dadurch gekennzeichnet, dass** der vorgenannte Thermoplast eine Mischung aus Polyamid 6, Caprolactam, einem Silan und wenigstens einer Komponente ist, die aus einem Terpolymer aus Ethylen, Acrylsäure und Acrylat und einem halogenierten Butylkautschuk, wie beispielsweise einem Brombutyl, ausgewählt ist.
